# EUROPEAN PATENT APPLICATION

(11) **EP 4 611 423 A1**
(43) Date of publication of application: **03.09.2025**
(21) Application number: 23884435.1
(22) Date of filing: 04.09.2023
(51) Int. Cl.: H04W 24/08

(54) **DATA PROCESSING METHOD AND COMMUNICATION APPARATUS**

(30) Priority: 03.11.2022 CN 202211373651
(71) Applicant: Huawei Technologies Co., Ltd., Shenzhen, Guangdong 518129 (CN)
(72) Inventor: CHENG, Wenjie, Shenzhen, Guangdong 518129 (CN); ZENG, Yu, Shenzhen, Guangdong 518129 (CN); GENG, Tingting, Shenzhen, Guangdong 518129 (CN)
(74) Representative: Thun, Clemens
(86) International application number: PCT/CN2023/116651
(87) International publication number: WO 2024/093498

(57) **Abstract**

Embodiments of this application disclose a data processing method and a communication apparatus, so that an access network device can obtain an MDT data permission. The method provided in embodiments of this application includes: determining a minimization of drive test MDT data permission allocated to the access network device; and sending first information to the access network device, where the first information indicates the MDT data permission.

## Description

This application claims priority to Chinese Patent Application No. 202211373651.6, filed with the China National Intellectual Property Administration on November 3, 2022 and entitled "DATA PROCESSING METHOD AND COMMUNICATION APPARATUS", which is incorporated herein by reference in its entirety.

### TECHNICAL FIELD

This application relates to the field of communication technologies, and in particular, to a data processing method and a communication apparatus.

### BACKGROUND

Minimization of drive test (minimization of drive test, MDT) is a technology in which a communication system automatically collects and analyzes a measurement report of a user equipment (user equipment, UE) that includes location information. An operator partially replaces conventional drive tests through measurement reporting performed by a subscribed UE, to automatically collect MDT data of the UE. The MDT data can be used for detection and optimization of problems and faults in a wireless network.

In a current communication system, the MDT data reported by the UE is transparently transmitted to a trace collection entity (trace collection entity, TCE), and an application scenario of the MDT data is limited.

### SUMMARY

Embodiments of this application provide a data processing method and a communication apparatus, so that an access network device can obtain an MDT data permission.

To resolve the foregoing technical problem, embodiments of this application provide the following technical solutions.

According to a first aspect, an embodiment of this application provides a data processing method, where the method is applied to a core network device, and the method includes: determining a minimization of drive test MDT data permission allocated to an access network device; and sending first information to the access network device, where the first information indicates the MDT data permission. In the foregoing solution, the core network device determines the MDT data permission allocated to the access network device, and then the core network device sends the first information to the access network device, where the first information indicates the MDT data permission. Because the access network device may obtain the MDT data permission allocated by the core network device to the access network device, the access network device has the MDT data permission, to extend an application scenario of MDT data.

In a possible implementation, the first information includes indication information of a terminal device that performs MDT. In the foregoing solution, the core network device sends the indication information of the terminal device that performs the MDT to the access network device, so that the access network device can obtain the MDT data for the terminal device indicated in the indication information.

In a possible implementation, the first information includes indication information of an MDT type; and the MDT type includes at least one of the following: immediate MDT and non-immediate MDT.

In a possible implementation, the first information includes usage information of the MDT, where the usage information of the MDT indicates that MDT data is used inside the access network device, or indicates that MDT data is used inside the access network device and indicates the access network device to transmit the MDT data to another access network device. In the foregoing solution, the access network device may use the MDT data based on the usage information of the MDT, to correctly use the MDT data and avoid a risk of leakage of the MDT data.

In a possible implementation, the first information includes: an identifier of the terminal device that performs the MDT, an MDT measurement item, and an MDT data permission corresponding to the MDT measurement item. In the foregoing solution, the access network device can obtain, for the UE indicated in the first information, MDT data corresponding to the MDT measurement item.

In a possible implementation, the method further includes: receiving an MDT data request sent by the access network device based on the MDT data permission; and sending a response corresponding to the MDT data request to the access network device, where the response includes the MDT data. In the foregoing solution, the core network device can send the MDT data to the access network device, so that the access network device has a capability of using the MDT data.

In a possible implementation, the MDT data includes: non-immediate MDT data that is of a terminal device in a non-connected state and that is buffered in the core network device, and/or immediate MDT data that is sent by a terminal device in a connected state to the core network device for a plurality of times.

In a possible implementation, the method further includes: receiving a first request from the access network device, where the first request is used to request the MDT data permission from the core network device. In the foregoing solution, the access network device may request the core network device to allocate the MDT data permission, so that the access network device can flexibly request the needed MDT data permission.

In a possible implementation, the method further includes: receiving a second request from the access network device, where the second request is used to request the core network device to modify the MDT data permission; modifying, based on the second request, the MDT data permission allocated to the access network device; and sending second information to the access network device, where the second information indicates the modified MDT data permission. In the foregoing solution, after receiving the second information, the access network device may obtain, by parsing the second information, the modified MDT data permission allocated by the core network device to the access network device, so that the access network device has the modified MDT data permission. This resolves a problem that the access network device cannot update the MDT data permission, and MDT data corresponding to the modified MDT data permission can be obtained by using the modified MDT data permission.

In a possible implementation, the second information includes the indication information of the terminal device that performs the MDT.

In a possible implementation, when the MDT is management-based MDT, the indication information of the terminal device includes at least one of the following: a terminal device selection proportion, a terminal device identifier list, and a terminal device filtering condition; or when the MDT is signaling-based MDT, the indication information of the terminal device includes an identifier of the terminal device.

In a possible implementation, the method further includes: receiving a third request from the access network device, where the third request is used to request the core network device to modify an MDT configuration; and sending third information to the access network device, where the third information includes the modified MDT configuration. In the foregoing solution, after receiving the third information, the access network device may obtain, by parsing the third information, the modified MDT configuration allocated by the core network device to the access network device. This resolves a problem that the access network device cannot update the MDT data, and MDT data corresponding to the modified MDT configuration can be obtained by using the modified MDT configuration.

In a possible implementation, the modified MDT configuration includes: a modified trigger condition corresponding to the MDT measurement item, and/or a modified configuration parameter corresponding to the MDT measurement item.

In a possible implementation, when the MDT is the immediate MDT, the configuration parameter includes: a measurement period of the MDT measurement item, and/or an MDT event triggering configuration parameter of the MDT measurement item; or when the MDT is the non-immediate MDT, the configuration parameter includes at least one of the following: a measurement interval of the MDT measurement item, measurement duration of the MDT measurement item, or an MDT event triggering configuration parameter of the MDT measurement item. In the foregoing solution, the core network device may modify a trigger condition of the MDT measurement item, to change, by modifying the trigger condition, a trigger condition for the UE to perform the MDT. Alternatively, the core network device may modify configuration parameters of one or more MDT measurement items, so that the access network device can obtain the modified trigger condition and a modified configuration parameter of the MDT measurement item.

In a possible implementation, the modified trigger condition includes an added or deleted trigger condition.

According to a second aspect, an embodiment of this application further provides a data processing method, where the method is applied to an access network device, and the method includes: receiving first information from a core network device; and obtaining, based on the first information, a minimization of drive test MDT data permission allocated to the access network device. In the foregoing solution, the core network device determines the MDT data permission allocated to the access network device, and then the core network device sends the first information to the access network device, where the first information indicates the MDT data permission. Because the access network device may obtain the MDT data permission allocated by the core network device to the access network device, the access network device has the MDT data permission, to extend an application scenario of MDT data.

In a possible implementation, the method further includes: obtaining MDT data based on the MDT data permission. In the foregoing solution, the access network device may use the MDT data permission, that is, the access network device has a capability of obtaining the MDT data, and the access network device may obtain the MDT data corresponding to the MDT data permission.

In a possible implementation, the obtaining the MDT data based on the MDT data permission includes: sending an MDT data request to the core network device based on the MDT data permission; and receiving, from the core network device, a response corresponding to the MDT data request, where the response includes the MDT data. In the foregoing solution, the core network device can send the MDT data to the access network device, so that the access network device has a capability of using the MDT data.

In a possible implementation, the MDT data includes: non-immediate MDT data that is of a terminal device in a non-connected state and that is buffered in the core network device, and/or immediate MDT data that is sent by a terminal device in a connected state to the core network device for a plurality of times.

In a possible implementation, the obtaining the MDT data based on the MDT data permission includes: receiving, based on the MDT data permission, an MDT measurement report sent by a terminal device, where the MDT measurement report includes the MDT data. In the foregoing solution, the terminal device can send the MDT data to the access network device, so that the access network device has a capability of using the MDT data.

In a possible implementation, the MDT data permission includes: usage information of MDT, where the usage information of the MDT indicates the access network device to transmit the MDT data to another access network device, and the method further includes: transmitting the MDT data to the another access network device. In the foregoing solution, the access network device may use the MDT data based on the usage information of the MDT, to correctly use the MDT data and avoid a risk of leakage of the MDT data.

In a possible implementation, the first information includes indication information of an MDT type; and the MDT type includes at least one of the following: immediate MDT and non-immediate MDT.

In a possible implementation, the first information includes: an identifier of the terminal device that performs the MDT, an MDT measurement item, and an MDT data permission corresponding to the MDT measurement item.

In a possible implementation, the method further includes: sending a first request to the core network device, where the first request is used to request the MDT data permission from the core network device. In the foregoing solution, the access network device may request the core network device to allocate the MDT data permission, so that the access network device can flexibly request the needed MDT data permission.

In a possible implementation, the method further includes: sending a second request to the core network device, where the second request is used to request the core network device to modify the MDT data permission; receiving second information from the core network device; and obtaining, based on the second information, the modified MDT data permission allocated to the access network device. In the foregoing solution, after receiving the second information, the access network device may obtain, by parsing the second information, the modified MDT data permission allocated by the core network device to the access network device, so that the access network device has the modified MDT data permission. This resolves a problem that the access network device cannot update the MDT data permission, and MDT data corresponding to the modified MDT data permission can be obtained by using the modified MDT data permission.

In a possible implementation, the method further includes: sending a third request to the core network device, where the third request is used to request the core network device to modify an MDT configuration; receiving third information from the core network device; and obtaining the modified MDT configuration based on the third information. In the foregoing solution, after receiving the third information, the access network device may obtain, by parsing the third information, the modified MDT configuration allocated by the core network device to the access network device. This resolves a problem that the access network device cannot update the MDT data, and MDT data corresponding to the modified MDT configuration can be obtained by using the modified MDT configuration.

In a possible implementation, the modified MDT configuration includes: a modified trigger condition corresponding to the MDT measurement item, and/or a modified configuration parameter corresponding to the MDT measurement item.

In a possible implementation, when the MDT is the immediate MDT, the configuration parameter includes: a measurement period of the MDT measurement item, and/or an MDT event triggering configuration parameter of the MDT measurement item; or when the MDT is the non-immediate MDT, the configuration parameter includes at least one of the following: a measurement interval of the MDT measurement item, measurement duration of the MDT measurement item, or an MDT event triggering configuration parameter of the MDT measurement item.

According to a third aspect, an embodiment of this application further provides a communication apparatus, where the communication apparatus is a core network device and includes:
a processing module, configured to determine a minimization of drive test MDT data permission allocated to an access network device; and
a sending module, configured to send first information to the access network device, where the first information indicates the MDT data permission.

In the third aspect of this application, the composition modules of the communication apparatus may further perform the steps described in the first aspect and the possible implementations. For details, refer to the descriptions in the first aspect and the possible implementations.

According to a fourth aspect, an embodiment of this application further provides a communication apparatus, where the communication apparatus is a core network device and includes:
a receiving module, configured to receive first information from the core network device; and
a processing module, configured to obtain, based on the first information, a minimization of drive test MDT data permission allocated to an access network device.

In the fourth aspect of this application, the composition modules of the communication apparatus may further perform the steps described in the second aspect and the possible implementations. For details, refer to the descriptions in the second aspect and the possible implementations.

According to a fifth aspect, an embodiment of this application provides a computer-readable storage medium. The computer-readable storage medium stores instructions, and when the instructions are run on a computer, the computer is enabled to perform the method according to the first aspect or the second aspect.

According to a sixth aspect, an embodiment of this application provides a computer program product including instructions. When the computer program product is run on a computer, the computer is enabled to perform the method according to the first aspect or the second aspect.

According to a seventh aspect, an embodiment of this application provides a communication apparatus. The communication apparatus may include an entity such as a core network device, an access network device, or a chip. The communication apparatus includes a processor and a memory. The memory is configured to store instructions. The processor is configured to execute the instructions in the memory, to enable the communication apparatus to perform the method according to any item of the first aspect or second aspect.

According to an eighth aspect, this application provides a chip system. The chip system includes a processor, configured to support a core network device or an access network device in implementing functions in the foregoing aspects, for example, sending or processing data and/or information in the foregoing methods. In a possible design, the chip system further includes a memory. The memory is configured to store program instructions and data that are necessary for the core network device or the access network device. The chip system may include a chip, or may include a chip and another discrete component.

According to a ninth aspect, this application provides a data processing system. The system includes the core network device according to any item of the third aspect and the access network device according to any item of the fourth aspect.

According to the foregoing technical solutions, it can be learned that embodiments of this application have the following advantages:

In embodiments of this application, the core network device determines the MDT data permission allocated to the access network device, and then the core network device sends the first information to the access network device, where the first information indicates the MDT data permission. Because the access network device may obtain the MDT data permission allocated by the core network device to the access network device, the access network device has the MDT data permission, to extend an application scenario of the MDT data.

### BRIEF DESCRIPTION OF DRAWINGS

FIG. 1 is a diagram of a system scenario to which a data processing method is applied according to an embodiment of this application;
FIG. 2 is a diagram of a structure of an access network device according to an embodiment of this application;
FIG. 3 is a diagram of an embodiment of a data processing method according to an embodiment of this application;
FIG. 4 is a diagram of another embodiment of a data processing method according to an embodiment of this application;
FIG. 5 is a diagram of another embodiment of a data processing method according to an embodiment of this application;
FIG. 6 is a diagram of another embodiment of a data processing method according to an embodiment of this application;
FIG. 7 is a diagram of another embodiment of a data processing method according to an embodiment of this application;
FIG. 8a is a diagram of another embodiment of a data processing method according to an embodiment of this application;
FIG. 8b is a diagram of another embodiment of a data processing method according to an embodiment of this application;
FIG. 9 is a diagram of another embodiment of a data processing method according to an embodiment of this application;
FIG. 10 is a diagram of a structure of a communication apparatus according to an embodiment of this application;
FIG. 11 is a diagram of another structure of a communication apparatus according to an embodiment of this application; and
FIG. 12 is a diagram of a structure of a data processing system according to an embodiment of this application.

### DESCRIPTION OF EMBODIMENTS

Embodiments of this application provide a data processing method and a communication apparatus, so that an access network device can obtain an MDT data permission.

The following describes embodiments of this application with reference to the accompanying drawings.

In the specification, claims, and accompanying drawings of this application, the terms "first", "second", and the like are intended to distinguish between similar objects but do not necessarily indicate a specific order or sequence. It should be understood that, the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

The technical solutions in this application may be applied to various communication systems, for example, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system (for example, a 6G mobile communication system) after the NR system, and a vehicle-to-everything (vehicle-to-everything, V2X) communication system.

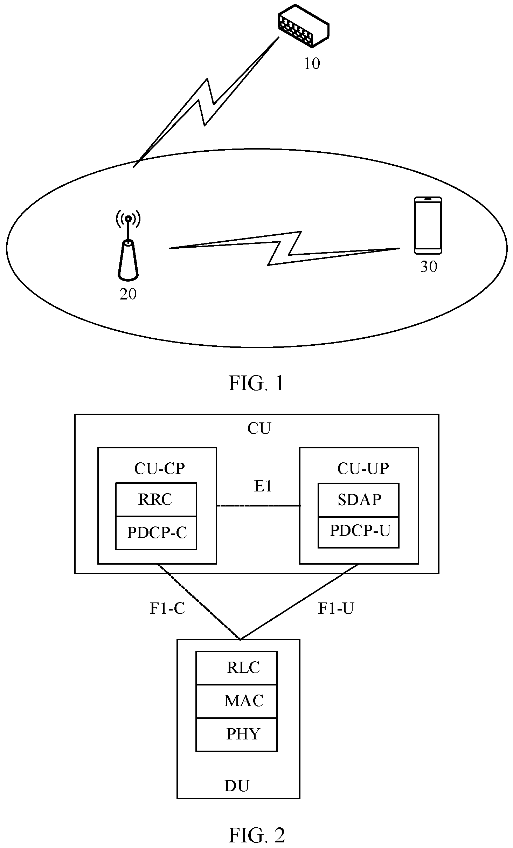

For ease of understanding the technical solutions in embodiments of this application, the following shows, with reference to FIG. 1, a system application scenario to which the method provided in embodiments of this application is applicable. A communication system to which this application is applicable includes a core network device, an access network device, and a terminal device. The access network device may include a network device. Communication transmission is performed between the core network device and the access network device in a wired or wireless manner. The access network device and the terminal device may perform communication transmission by using a beam.

The following describes the core network device, the network device, and the terminal device in this application.

As shown in FIG. 1, a system architecture to which a data processing method in embodiments of this application is applied may include a core network (core network, CN) device 10, an access network device 20, and a terminal device 30.

The core network device 10 may be connected to the access network device 20. For example, the core network device 10 may be specifically an LTE core network device, or may be a 5G core network device. For example, the core network device 10 may specifically include an access and mobility management function (access and mobility management function, AMF) entity, or the core network device 10 may specifically include a mobility management entity (mobility management entity, MME). The core network device 10 has a capability of allocating and managing a minimization of drive test (minimization of drive test, MDT) data permission. MDT data is data in an MDT measurement report generated after the terminal device 30 performs MDT. In subsequent embodiments, an example in which the core network device 10 is specifically the AMF entity (referred to as AMF for short in the following) is used for description.

The access network device 20 may be a device in a wireless network, and the access network device 20 may obtain an MDT data permission from the core network device 10, to obtain the MDT data by using the MDT data permission. For example, the access network device 20 may be a device that is deployed in a radio access network and that provides a wireless communication function for the terminal device. For example, the access network device 20 may be a radio access network (radio access network, RAN) node that enables the terminal device to access the wireless network, and the access network device 20 may also be referred to as the network device. The access network device in embodiments of this application may be the access network device (such as a gNB or an eNB) in the RAN, or may be a device having some or all of functions of the access network device. For example, the access network device 20 includes a central unit (central unit, CU) and/or a distributed unit (distributed unit, DU).

FIG. 2 is a diagram of a structure of an access network device according to an embodiment of this application. The access network device uses a CU-DU split architecture. It may be understood that, the access network device is divided into the CU and the DU from the perspective of logical functions. The CU and the DU may be physically separated or deployed together. A plurality of DUs may share one CU. One DU may alternatively be connected to a plurality of CUs (not shown in the figure). The CU and the DU may be connected through an interface, for example, an F1 interface. The CU and the DU may be divided based on a protocol layer of a wireless network. For example, a possible division manner is that the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like. It may be understood that, division of processing functions of the CU and the DU based on the protocol layers is merely an example, and the processing functions of the CU and the DU may alternatively be divided in another manner. For example, the CU or the DU may have functions of more protocol layers through division. For example, the CU or the DU may alternatively have some processing functions of the protocol layers through division. In a design, some functions of an RLC layer and a function of a protocol layer above the RLC layer are set on the CU, and a remaining function of the RLC layer and a function of a protocol layer below the RLC layer are set on the DU. In another design, functions of the CU or the DU may alternatively be obtained through division based on a service type or another system requirement. For example, division is performed based on a delay, a function whose processing time meets a delay requirement is disposed on the DU, and a function whose processing time does not meet the delay requirement is disposed on the CU. In another design, the CU may alternatively have one or more functions of the core network. One or more CUs may be disposed in a centralized manner or a split manner. For example, the CUs may be disposed on a network side for ease of centralized management. The DU may have a plurality of radio frequency functions, or the radio frequency functions may be disposed remotely.

A function of the CU may be implemented by one entity or different entities. For example, the functions of the CU may be further divided, for example, separated into a control plane (control plane, CP) and a user plane (user plane, UP), namely, the control plane (CU-CP) of the CU and the user plane (CU-UP) of the CU. For example, the CU-CP and the CU-UP may be implemented by different functional entities, and are connected through an E1 interface. The CU-CP and the CU-UP may be coupled to the DU, to jointly perform functions of the access network device. The control plane CU-CP of the CU further includes a further division architecture. In other words, an existing CU-CP is further divided into a CU-CP 1 and a CU-CP 2. The CU-CP 1 includes various radio resource management functions, and the CU-CP 2 includes only an RRC function and a PDCP-C function (namely, a basic function of control plane signaling at the PDCP layer).

In embodiments of this application, the terminal device 30 may be various devices that provide voice and/or data connectivity for a user, and may also be referred to as a terminal, a user equipment (user equipment, UE), a mobile station, a mobile terminal, or the like. The terminal device 30 may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, a smart grid, smart furniture, smart office, smart wearable, smart transportation, and a smart city. The terminal device 30 may be a mobile phone, a tablet computer, a computer having wireless sending and receiving functions, a wearable device, an aerospace device, or the like. In embodiments of this application, a chip used in the foregoing devices may also be referred to as a terminal. In this application, an example in which the UE is used as the terminal device is used for description.

The following describes an MDT scenario to which embodiments of this application are applicable.

For example, an MDT measurement type in the MDT scenario is first described by using the following examples.
1. Signal level measurement: The UE measures a signal level of a radio signal, and reports a measurement result to the access network device.
2. Quality of service (quality of service, QoS) measurement: The access network device performs QoS measurement. For example, the access network device may measure traffic of a service, a throughput of the service, a service delay, and the like. Alternatively, QoS measurement may be performed by the UE. For example, the UE may measure an uplink processing delay. Alternatively, joint processing may be performed on QoS measurement by the access network device and the UE, for example, air interface delay measurement. A time period from a time point at which a data packet passes through an SDAP/PDCP layer of the access network device to a time point at which the data packet reaches an SDAP/PDCP layer of the UE is measured.
3. Accessibility measurement: The UE records information about an RRC connection setup failure and reports the information to the access network device.

For example, the following describes MDT in an MDT-based scenario, where the MDT includes non-immediate (logged) MDT and immediate (immediate) MDT.

The logged MDT is MDT performed by a UE in an idle (idle) state or an inactive (inactive) state. The logged MDT is used for measurement of strength of a received signal. Generally, if the access network device configures the UE in the idle state or the inactive state to perform the MDT, when the UE enters a connected state, the UE does not continue to perform the MDT based on an MDT measurement configuration obtained when the UE is in the idle state or the inactive state. To obtain a measurement result, the access network device may configure MDT measurement that is performed when the UE is in the connected state. The immediate MDT is MDT performed by the UE in the connected state. The immediate MDT is used for measurement of at least one of a data amount, a throughput, a packet transmission delay, a packet loss rate, or a processing delay of the UE.

When the UE is in the connected state, the access network device configures a logged MDT measurement configuration for the UE, for example, notifies the UE of the logged MDT measurement configuration through an RRC message. When the UE enters the idle state or the inactive state, the UE records the corresponding measurement result based on the corresponding logged MDT measurement configuration. When the UE initiates an RRC connection to the access network device, the UE includes indication information in the RRC message. The indication information indicates a logged MDT measurement result currently recorded by the UE. The access network device may send a logged MDT request to the UE, and then the UE reports the logged MDT measurement result to the access network device.

In the logged MDT-based scenario and the immediate MDT-based scenario, the access network device may separately initiate an MDT measurement task. The MDT measurement tasks may be classified into signaling-based MDT (signaling-based MDT) and management-based MDT (management-based MDT).

First, the signaling-based MDT is described. The signaling-based MDT refers to MDT for a specific UE. The access network device receives, from the core network device, indication information of performing MDT by the specific UE. For the signaling-based MDT, the core network device does not initiate the signaling-based MDT for the UE unless the UE has agreed to perform the MDT. For the signaling-based MDT, the core network device notifies the access network device of MDT configuration information and an internet protocol (internet protocol, IP) address of a trace collection entity (trace collection entity, TCE). The MDT configuration information includes at least one of the following: an MDT type, an MDT measurement range, an MDT configuration parameter, and a public land mobile network (public land mobile network, PLMN) list of the signaling-based MDT. For example, the MDT type may include the immediate MDT and the logged MDT, and the MDT configuration parameter includes measurement duration of the immediate MDT, a measurement interval and measurement duration of the logged MDT, and the like.

The following describes the management-based MDT. The management-based MDT is not the MDT for the specific UE. The access network device receives, from the core network device, indication information of performing the MDT. The access network device may select one or more UEs from UEs managed by the access network device, and perform the management-based MDT for the selected one or more UEs. For the management-based MDT, when selecting the UE, the access network device may consider whether the UE agrees to perform the MDT, for example, select only a UE that agrees to perform the MDT to perform the MDT. For example, the core network device sends indication information to the access network device, where the indication information indicates whether the one or more UEs agree to perform the MDT. For example, the core network device sends management-based MDT allowed indication (management-based MDT allowed indication) information to the access network device, and the access network device determines, based on the management-based MDT allowed indication information, the UE that agrees to perform the MDT. For another example, the core network device may send a PLMN list of the management-based MDT to the access network device, and the access network device determines, based on the PLMN list of the management-based MDT, the UE that agrees to perform the MDT.

In the MDT-based scenario, after the UE performs the MDT, the UE may generate MDT data, and the UE sends the MDT data to the TCE. The MDT data may be transparently transmitted from the UE to the TCE. The access network device does not have an MDT data permission, and therefore the access network device cannot use the MDT data. For example, in a RAN-based scenario, the access network device cannot obtain continuous UE data from MDT data. The continuous UE data refers to data generated by the UE by performing the MDT in a continuous period of time, and the continuous UE data includes at least one of the following: location information of the UE in the continuous period of time, a reference signal received power (reference signal received power, RSRP), reference signal received quality (reference signal received quality, RSRQ), a signal to interference plus noise ratio (signal to interference plus noise ratio, SINR), a packet loss rate, and delay information. The access network device cannot use the continuous UE data as input and inference information of an artificial intelligence (artificial intelligence, AI) model, and there is a problem that the access network device cannot perform training and inference on the AI model. The MDT data in embodiments of this application is not limited to an application scenario of the AI model, and may be extended to any application scenario in which the MDT data is used, for example, estimation of channel quality of a cell in which the UE is currently located.

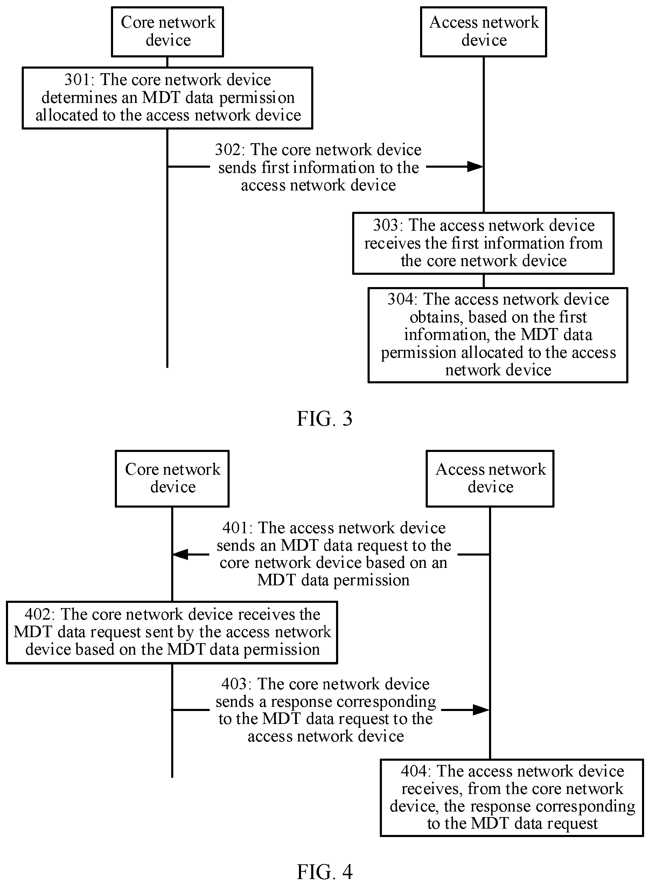

To resolve a problem that the access network device does not have the MDT data permission, an embodiment of this application provides a data processing method, to resolve a problem that the access network device cannot obtain the MDT data permission. FIG. 3 is a schematic flowchart of interaction between a core network device and an access network device according to an embodiment of this application. The following steps are included.

301: The core network device determines an MDT data permission allocated to the access network device.

The core network device has permission to allocate MDT data, and the core network device first determines to allocate the MDT data permission to the access network device. The MDT data permission is a permission used to obtain MDT data and use the MDT data. The MDT data permission is allocated by the core network device to the access network device. Specifically, the MDT data permission may include at least one of the following: a type of MDT data that can be obtained by the access network device, an identifier (identifier, ID) of a UE that provides the MDT data for the access network device, a purpose of using the MDT data by the access network device, an MDT measurement item corresponding to the MDT data that can be obtained by the access network device, and the like. In embodiments of this application, a manner in which the core network device specifically allocates the MDT data permission to the access network device is not limited.

For example, if the MDT data permission that the core network device may allocate to the access network device is immediate MDT data, the access network device has a permission to obtain the immediate MDT data, but does not have a permission to obtain non-immediate MDT data.

For another example, if the MDT data permission that the core network device may allocate to the access network device is MDT data generated after a UE 1 performs the MDT, the access network device has a permission to obtain the MDT data of the UE 1, but does not have a permission to obtain MDT data of another UE other than the UE 1. Specifically, the UE may authorize whether to perform the MDT. For different UEs, a user may separately authorize whether to perform the MDT. The core network device can only allocate, to the access network device, an identifier of a UE that performs the MDT for the UE that is authorized to perform the MDT. For the UE that is not authorized to perform the MDT, the core network device cannot allocate, to the access network device, a permission of performing the MDT by the UE.

For another example, the core network device allocates a permission of usage of the MDT to the access network device, so that the access network device can use the MDT data for the usage of the MDT. For example, if the core network device allocates, to the access network device, a permission to use the MDT data only inside the access network device, after obtaining the MDT data, the access network device may use the MDT data only inside the access network device, and cannot transmit the MDT data to another access network device. For another example, if the core network device allocates, to the access network device, a permission to transmit the MDT data to the outside, after obtaining the MDT data, the access network device may use the MDT data inside the access network device, or may transmit the MDT data to another access network device.

For another example, if the MDT data permission that the core network device may allocate to the access network device is MDT data generated after the UE performs a first MDT measurement item, the access network device has a permission to obtain the MDT data generated after the UE performs the first MDT measurement, but does not have a permission to obtain MDT data corresponding to another MDT measurement item other than the first MDT measurement item.

302: The core network device sends first information to the access network device, where the first information indicates the MDT data permission.

For example, after allocating the MDT data permission to the access network device, the core network device may generate the first information, where the first information indicates the MDT data permission, and then the core network device sends the first information to the access network device. For example, the first information may be an MDT data permission configuration message, or the first information may be control signaling. This is not limited herein.

In some implementations of this application, the first information includes indication information of the UE that performs the MDT.

For example, the indication information of the UE that performs the MDT may indicate the identifier of the UE that is to perform the MDT. The core network device sends the indication information of the UE that performs the MDT to the access network device, so that the access network device can obtain the MDT data for the UE indicated in the indication information.

In some implementations of this application, when the MDT is management-based MDT, the indication information of the UE that performs the MDT includes at least one of the following: a selection proportion of UEs that perform the MDT, an identifier list of UEs that perform the MDT, or a filtering condition of UEs that perform the MDT; or
when the MDT is signaling-based MDT, the indication information of the UE that performs the MDT includes the identifier of the UE that performs the MDT.

For example, the MDT is classified into the signaling-based MDT and the management-based MDT from a perspective of a data collection object. For details, refer to the foregoing descriptions of the signaling-based MDT and the management-based MDT.

The signaling-based MDT is for a specific UE, and the indication information of the UE that performs the MDT includes the identifier of the UE that performs the MDT, so that the access network device may determine, based on the indication information of the UE that performs the MDT, the identifier of the UE that performs the MDT, and the access network device may obtain the MDT data for the UE that performs the MDT. In another implementation, if the first information does not include the identifier of the UE that performs the MDT, the core network device considers by default that MDT data permission configurations for all UEs are consistent.

The management-based MDT is for a plurality of UEs in a specified area range, and a manner of specifying an area range may include at least one of the following: a selection proportion of UEs that perform the MDT, an identifier list of UEs that perform the MDT, and a filtering condition of UEs that perform the MDT.

There are a plurality of values of the selection proportion of the UEs that perform the MDT. For example, if the selection proportion of the UEs that perform the MDT is 5%, the access network device may select, based on the selection proportion of the UEs that perform the MDT, 5% UEs from all the currently serving UEs to perform the MDT. The identifier list of the UEs that perform the MDT includes the identifier of the UE that performs the MDT, and the access network device may select, based on the identifier list of the UEs that perform the MDT, a UE in the list to perform the MDT. The filtering condition of the UEs that perform the MDT may be used by the access network device to select, from all the currently serving UEs, a UE that meets the filtering condition to perform the MDT. In embodiments of this application, the access network device may indicate, through the first information, the access network device to select one or more UEs to perform the MDT, and the access network device can determine the permission of the UE that performs MDT, to resolve a problem that the access network device cannot obtain the MDT data permission.

In some implementations of this application, the first information includes indication information of an MDT type; and the MDT type includes at least one of the following: immediate MDT and non-immediate MDT. For detailed descriptions of the immediate MDT and the non-immediate MDT, refer to the foregoing related content.

Specifically, the core network device sends the indication information of the MDT type to the access network device, so that the access network device can obtain the MDT data for the MDT type indicated in the indication information. For example, if the core network device allocates an immediate MDT data permission to the access network device, the access network device can obtain only the immediate MDT data, but cannot obtain the non-immediate MDT data. For another example, if the core network device allocates a non-immediate MDT data permission to the access network device, the access network device can obtain only the non-immediate MDT data, but cannot obtain the immediate MDT data.

In some implementations of this application, the first information includes usage information of the MDT.

The usage information of the MDT indicates usage of the MDT data, and includes: indicating that MDT data is used inside the access network device, or indicating that MDT data is used inside the access network device and indicating the access network device to transmit the MDT data to another access network device. For detailed descriptions of the usage of the MDT, refer to the foregoing related content.

For example, the core network device indicates that the MDT data is used inside the access network device and indicates the access network device to transmit the MDT data to the another access network device. After the access network device obtains the MDT data, the access network device may input the MDT data into an AI model of the access device for model training or inference, and the access network device may send the MDT data to the another access network device, so that the another access network device uses the MDT data in an AI model of the another access network device for model training or inference. For example, one core network device is a source access network device, and another core network device is a target access network device. The source access network device sends the MDT data to the target access network device through a communication interface. For example, the usage information of the MDT may be represented by a 1-bit value. In another implementation, if the usage information of the MDT is not configured in the first information, the core network device may use the MDT data inside an access network device by default, or may send the MDT data to the another access network device.

In some implementations of this application, the first information includes the identifier of the UE that performs the MDT, an MDT measurement item, and an MDT data permission corresponding to the MDT measurement item.

The MDT may be the signaling-based MDT, and the first information includes the identifier of the UE that performs the MDT. For example, the identifier of the UE that performs the MDT may be determined based on the foregoing indication information of the UE that performs the MDT. The core network device sends the identifier of the UE that performs the MDT to the access network device, so that the access network device can obtain the MDT data for the UE indicated in the first information.

In addition, the MDT measurement item may specifically include one or more items, and a specific implementation of the MDT measurement item is not limited. For example, the MDT is the immediate MDT, and the MDT measurement item may include at least one of the following: M1, M2, M3, M4, M5, M6, M7, M8 and M9. A specific execution manner of the MDT measurement item is not described in detail by using an example. For example, the MDT is the non-immediate MDT, and the MDT measurement item may include at least one of the following: location information (locationInfo), a serving cell identity (servCellIdentity), a serving cell measurement result (measResultServingCell), and a neighboring cell measurement result (measResultNeighCells), which indicates that any cell selection state (anyCellSelectionDetected) is detected and a measurement log is suspended due to detection of an intra-device coexistence problem (inDeviceCoexDetected). The specific execution manner of the MDT measurement item is not described in detail.

The MDT data permission corresponding to the MDT measurement item refers to an MDT data permission set by the core network device for each MDT measurement item. For example, if an MDT data permission corresponding to one MDT measurement item is 1, it indicates that the core network device allocates the MDT data permission corresponding to the MDT measurement item to the access network device. For another example, if an MDT data permission corresponding to one MDT measurement item is 0, it indicates that the core network device does not allocate the MDT data permission corresponding to the MDT measurement item to the access network device. A value of the MDT data permission is not limited.

Further, the MDT may be classified into the immediate MDT and the non-immediate MDT. The core network device may configure the MDT data permission for each measurement item of the immediate MDT. For example, the MDT measurement item of the immediate MDT is M1, and an MDT data permission corresponding to M1 is 1, which indicates that the core network device allocates the MDT data permission to the access network device. For each measurement item of the non-immediate MDT, the core network device may configure the MDT data permission. For example, the MDT measurement item of the non-immediate MDT is location information, and an MDT data permission corresponding to the location information is 0, which indicates that the core network device does not allocate the MDT data permission to the access network device.

303: The access network device receives the first information from the core network device.

304: The access network device obtains, based on the first information, the MDT data permission allocated to the access network device.

After receiving the first information from the core network device, the access network device may obtain, by parsing the first information, the MDT data permission allocated by the core network device to the access network device, so that the access network device has a capability of obtaining the MDT data.

For descriptions of the first information and the MDT data permission, refer to the foregoing content.

In some implementations of this application, in addition to the foregoing 303 and 304, the data processing method performed by the access network device further includes the following step A1:
A1: The access network device obtains the MDT data based on the MDT data permission.

If the access network device receives the MDT data permission from the core network device, the access network device may use the MDT data permission, that is, the access network device has the capability of obtaining the MDT data, and the access network device may obtain the MDT data corresponding to the MDT data permission. For a specific manner of obtaining the MDT data by the access network device, refer to descriptions of examples in subsequent embodiments.

Descriptions of examples are as follows. When performing model training or inference on the AI model of the access network device, the access network device obtains continuous UE data as input information and inference information of the AI model. The access network device may obtain the corresponding MDT data based on the MDT data permission, and the access network device obtains the continuous UE data based on the MDT data. For descriptions of the MDT data and the continuous UE data, refer to the foregoing content.

In some implementations of this application, step A1 in which the access network device obtains the MDT data based on the MDT data permission includes:
A11: The access network device receives, based on the MDT data permission, an MDT measurement report sent by the UE, where the MDT measurement report includes the MDT data.

Specifically, after receiving the MDT data permission, the access network device delivers MDT configuration information to the UE based on the MDT data permission, the UE performs the MDT based on the MDT configuration information, the UE generates the MDT measurement report, and the UE sends the MDT measurement report to the access network device.

In some implementations of this application, the MDT data permission includes the usage information of the MDT, and the usage information of the MDT indicates the access network device to transmit the MDT data to the another access network device. In addition to the foregoing steps 303 and 304, the data processing method performed by the access network device further includes the following step B1:
B1: The access network device transmits the MDT data to the another access network device.

In this implementation, if the MDT data permission allocated by the core network device to the access network device indicates the access network device to transmit the MDT data to the another access network device, the access network device obtains, based on the MDT data permission, a permission to transmit the MDT data to the outside. After the access network device obtains the MDT data, the access network device may transmit the MDT data to the another access network device. This resolves a problem that the another access network device cannot obtain the MDT data. For example, the another access network device receives the MDT data from an access network device that has an MDT data sending permission, the another access network device obtains the continuous UE data from the MDT data, and the another access network device inputs the continuous UE data into the AI model of the another access network device for model training or inference.

For example, when the usage information of the MDT indicates the access network device to transmit the MDT data to the another access network device, the first information may further include cell PLMN information, cell global identifier (cell global identifier, CGI) information, and the like of the MDT data that is used outside.

In embodiments of this application, the core network device interacts with the access network device through the method shown in FIG. 3. In addition to performing step 301 and step 302, the core network device may further perform step 402 and step 403 that are shown in FIG. 4. In addition to performing step 303 and step 304, the access network device may further perform step 401 and step 404 that are shown in FIG. 4. The MDT data permission, the MDT data, and the like in the foregoing embodiments are not described in detail. For details, refer to the embodiment shown in FIG. 3. FIG. 4 is another schematic flowchart of interaction between a core network device and an access network device according to an embodiment of this application. The following steps are included.

401: The access network device sends an MDT data request to the core network device based on an MDT data permission.

After the access network device obtains the MDT data permission through the embodiment shown in FIG. 3, the access network device sends the MDT data request to the core network device based on the MDT data permission. For descriptions of the MDT data permission, refer to the foregoing embodiments.

402: The core network device receives the MDT data request sent by the access network device based on the MDT data permission.

The core network device receives the MDT data request from the access network device, performs verification based on the MDT data permission carried in the MDT data request, and performs subsequent step 403 after the verification of the MDT data permission that is performed on the access network device succeeds.

403: The core network device sends a response corresponding to the MDT data request to the access network device, where the response includes MDT data.

Descriptions of examples are as follows. If the core network device allocates an immediate MDT data permission to the access network device, and an identifier of a UE 1 and an MDT measurement item 1 are allocated, the MDT data sent by the core network device to the access network device is immediate MDT data obtained by the UE 1 by performing the MDT measurement item 1.

For another example, if the core network device allocates a non-immediate MDT data permission to the access network device, and an identifier of a UE 2 and an MDT measurement item 2 are allocated, the MDT data sent by the core network device to the access network device is non-immediate MDT data obtained by the UE 2 by performing the MDT measurement item 2.

404: The access network device receives, from the core network device, the response corresponding to the MDT data request, where the response includes the MDT data.

The access network device may obtain, by parsing the response, the MDT data allocated by the core network device to the access network device.

In some implementations of this application, the MDT data includes: non-immediate MDT data that is of a UE in a non-connected state and that is buffered in the core network device, and/or immediate MDT data that is sent by a UE in a connected state to the core network device for a plurality of times.

When the UE in the connected state performs immediate MDT, the UE may send MDT data of the immediate MDT to the access network device for a plurality of times. When the UE in the non-connected state performs non-immediate MDT, the UE buffers the MDT data. Then, when initiating an RRC connection to the access network device, the UE indicates that the MDT data of the non-immediate MDT is currently recorded, and then the access network device may request the UE, and the UE reports the MDT data of the non-immediate MDT to the access network device. In addition, if the access network device cannot obtain the MDT data from the UE, the access network device may request the MDT data from the core network device or a TCE.

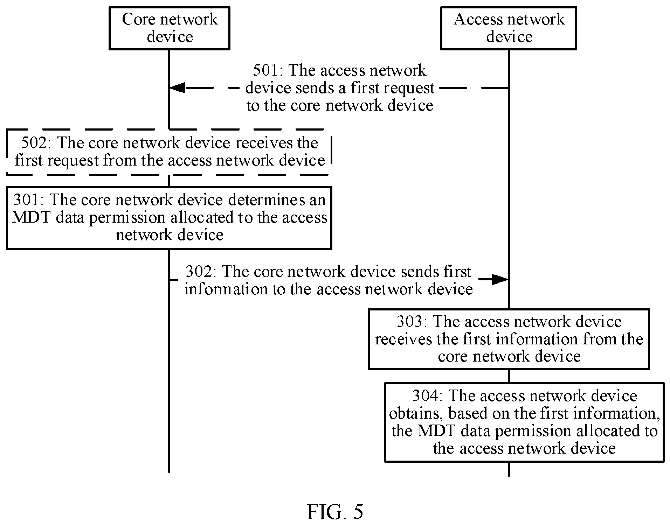

In embodiments of this application, the core network device interacts with the access network device through the method shown in FIG. 3 and FIG. 4. In addition to performing step 301 and step 302 as well as step 402 and step 403, the core network device may further perform step 502 shown in FIG. 5. In addition to performing step 303 and step 304 as well as step 401 and step 404, the access network device may further perform step 501 shown in FIG. 5. The MDT data permission, the MDT data, and the like in the foregoing embodiments are not described in detail. For details, refer to the embodiments shown in FIG. 3 and FIG. 4. FIG. 5 is another schematic flowchart of interaction between a core network device and an access network device according to an embodiment of this application. Before step 301 is performed, the method provided in embodiments of this application further includes the following steps.

501: The access network device sends a first request to the core network device, where the first request is used to request an MDT data permission from the core network device.

When the access network device obtains MDT data, the access network device generates the first request. For example, the first request may specifically include at least one of the following: an MDT type that the access network device requests to obtain, an identifier of a UE that performs MDT, an MDT measurement item, an MDT data permission corresponding to the MDT measurement item, and the like. For descriptions of the MDT type, the identifier of the UE that performs the MDT, the MDT measurement item, and the MDT data permission corresponding to the MDT measurement item, refer to the foregoing content.

502: The core network device receives the first request.

The core network device may parse the first request, and determine the MDT data permission requested by the access network device from the core network device.

For descriptions of the MDT data permission, refer to the foregoing embodiments.

In some implementations of this application, after the core network device performs step 502, the core network device may further perform step 301 and step 302 that are shown in FIG. 3. Details are not described herein again.

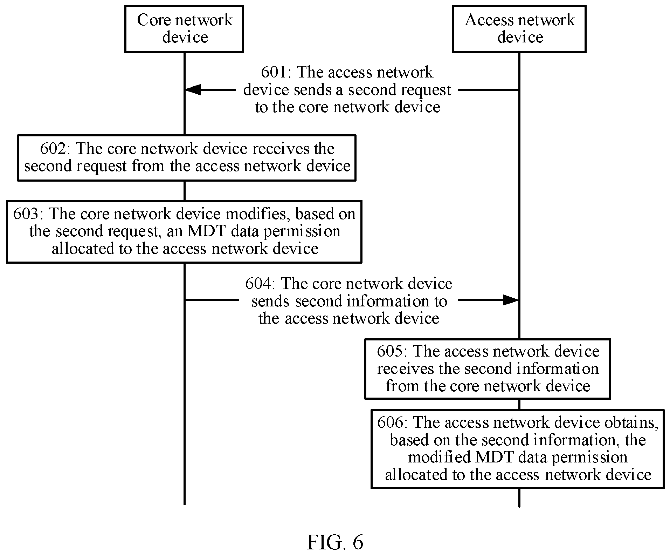

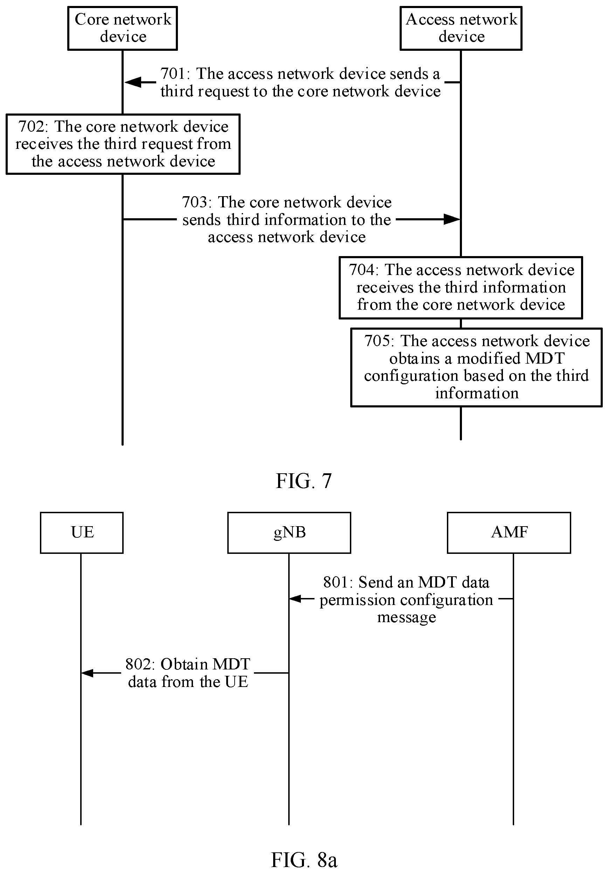

In some implementations of this application, after the access network device obtains the MDT data, if the MDT data cannot meet a requirement of the access network device, the access network device may request the core network device to modify the MDT data permission or modify an MDT configuration, to resolve a problem that currently the MDT data cannot meet the requirement of the access network device. The following uses FIG. 6 as an example to describe a case in which the access network device requests the core network device to modify the MDT data permission, and uses FIG. 7 as an example to describe a case in which the access network device requests the core network device to modify the MDT configuration.

In embodiments of this application, the core network device interacts with the access network device through the method shown in FIG. 3, FIG. 4, and FIG. 5. In addition to performing step 301 and step 302, step 402 and step 403, and step 502, the core network device may further perform step 602 to step 604 shown in FIG. 6. In addition to performing step 303 and step 304, step 401 and step 404, and step 501, the access network device may further perform step 601 as well as step 605 and step 606 shown in FIG. 6. The MDT data permission, the MDT data, and the like in the foregoing embodiments are not described in detail again. For details, refer to the embodiments shown in FIG. 3 to FIG. 5.

FIG. 6 is another schematic flowchart of interaction between a core network device and an access network device according to an embodiment of this application. The following steps are included.

601: The access network device sends a second request to the core network device, where the second request is used to request the core network device to modify an MDT data permission.

Step 601 may be performed after step 304 shown in FIG. 3 is performed.

The second request may include at least one of the following: an MDT type that the access network device requests to modify, an identifier that is of a UE that performs MDT and that the access network device requests to modify, an MDT data permission the access network device requests to modify, and the like. For example, the second request may be specifically an MDT incremental configuration data permission request message, or the second request may be specifically another request message. This is not limited herein. The access network device may request to modify any one or more of the foregoing three types. This is not limited herein. For descriptions of the MDT type, the identifier of the UE that performs the MDT, and the MDT data permission, refer to the foregoing content.

In some implementations of this application, modifying the MDT data permission may include adding an MDT data permission or deleting an MDT data permission.

602: The core network device receives a second request from the access network device, where the second request is used to request the core network device to modify the MDT data permission.

603: The core network device modifies, based on the second request, the MDT data permission allocated to the access network device.

After receiving the second request, the core network device may modify, based on the second request, the current MDT data permission allocated to the access network device, to meet a requirement of the access network device for modifying the MDT data permission.

604: The core network device sends second information to the access network device, where the second information indicates the modified MDT data permission.

After modification of the current MDT data permission allocated to the access network device is completed, the core network device may indicate the modified MDT data permission to the access network device based on the second information. For example, the second information may be specifically an MDT configuration and a data permission request response.

605: The access network device receives the second information from the core network device.

606: The access network device obtains, based on the second information, the modified MDT data permission allocated to the access network device.

After receiving the second information, the access network device may obtain, by parsing the second information, the modified MDT data permission allocated by the core network device to the access network device, so that the access network device has the modified MDT data permission. This resolves a problem that the access network device cannot update the MDT data permission, and MDT data corresponding to the modified MDT data permission can be obtained by using the modified MDT data permission.

FIG. 6 is used as an example to describe a manner in which the core network device modifies the MDT data permission. In some implementations of this application, after the access network device obtains the MDT data, if the MDT data cannot meet a requirement of the access network device, the access network device may request the core network device to modify the MDT configuration, to resolve a problem that currently the MDT data cannot meet the requirement of the access network device.

In embodiments of this application, the core network device interacts with the access network device through the method shown in FIG. 3, FIG. 4, FIG. 5, and FIG. 6. In addition to performing step 301 and step 302, step 402 and step 403, step 502, and step 602 to step 604, the core network device may further perform step 702 and step 703 that are shown in FIG. 7. In addition to performing step 303 and step 304, step 401 and step 404, step 501, step 601, step 605, and step 606, the access network device may further perform step 701 as well as step 704 and step 705 that are shown in FIG. 7. The MDT data permission, the MDT data, and the like in the foregoing embodiments are not described in detail again. For details, refer to the embodiments shown in FIG. 3 to FIG. 6.

FIG. 7 is another schematic flowchart of interaction between a core network device and an access network device according to an embodiment of this application. The following steps are included.

701: The access network device sends a third request to the core network device, where the third request is used to request the core network device to modify an MDT configuration.

The third request may include at least one of the following: an MDT type that the access network device requests to modify, an identifier that is of a UE that performs MDT and that the access network device requests to modify, an MDT measurement item that the access network device requests to modify, and the like. For example, the third request may be specifically an MDT incremental configuration request message, or the third request may be specifically another request message. This is not limited herein. The access network device may request to modify any one or more of the foregoing three types. This is not limited herein. For descriptions of the MDT type, the identifier of the UE that performs the MDT, and the MDT measurement item, refer to the foregoing content.

In some implementations of this application, modifying the MDT configuration may include adding an MDT configuration or deleting an MDT configuration.

702: The core network device receives the third request from the access network device, where the third request is used to request the core network device to modify the MDT configuration.

In some implementations of this application, the third request and the second request in the embodiment shown in FIG. 6 may be sent through a same message, or the third request and the second request may be sent through different messages. This is not limited herein.

703: The core network device sends third information to the access network device, where the third information includes the modified MDT configuration.

After receiving the third request, the core network device may modify, based on the third request, the current MDT configuration allocated to the access network device, to meet a requirement of the access network device for modifying the MDT configuration.

In some implementations of this application, the third information and the second information in the embodiment in FIG. 6 may be sent through a same message, or the third information and the second information may be sent through different messages. This is not limited herein.

After modifying the current MDT configuration allocated to the access network device, the core network device may determine the modified MDT configuration, and the core network device may indicate the modified MDT configuration to the access network device based on the third information. For example, the third information may be specifically an MDT configuration request response.

In some implementations of this application, the modified MDT configuration includes: a modified trigger condition corresponding to the MDT measurement item, and/or a modified configuration parameter corresponding to the MDT measurement item.

The core network device may modify a trigger condition of the MDT measurement item, to change, by modifying the trigger condition, a trigger condition for the UE to perform the MDT. Alternatively, the core network device may modify configuration parameters of one or more MDT measurement items.

In some implementations of this application, the modified trigger condition includes an added or deleted trigger condition.

The core network device may add a trigger condition. For example, the added trigger condition is AI model training or inference. In addition, when the access network device does not use MDT data corresponding to the original trigger condition, the core network device may further delete the corresponding trigger condition.

In some implementations of this application, when the MDT is immediate MDT, the configuration parameter may include: a measurement period of the MDT measurement item, and/or an MDT event triggering configuration parameter of the MDT measurement item. Specifically, the core network device may modify the measurement period of the MDT measurement item, for example, increase or shorten the measurement period of the MDT measurement item. Alternatively, the core network device may modify the MDT event triggering configuration parameter. For example, a new MDT event triggering configuration parameter is added, an original MDT event triggering configuration parameter is deleted, or a value of the MDT event triggering configuration parameter is modified.

When the MDT is the non-immediate MDT, the configuration parameter includes at least one of the following: a measurement interval of the MDT measurement item, measurement duration of the MDT measurement item, or an MDT event triggering configuration parameter of the MDT measurement item. Specifically, the core network device may modify the measurement interval of the MDT measurement item, for example, increase or shorten the measurement interval of the MDT measurement item. Alternatively, the core network device may modify the measurement duration of the MDT measurement item. Alternatively, the core network device may modify the MDT event triggering configuration parameter. For example, a new MDT event triggering configuration parameter is added, an original MDT event triggering configuration parameter is deleted, or a value of the MDT event triggering configuration parameter is modified.

For example, the modifying the MDT event triggering configuration parameter may include: modifying an RSRP threshold, or modifying an RSRQ threshold.

704: The access network device receives the third information from the core network device.

705: The access network device obtains the modified MDT configuration based on the third information.

After receiving the third information, the access network device may obtain, by parsing the third information, the modified MDT configuration allocated by the core network device to the access network device. This resolves a problem that the access network device cannot update the MDT data, and MDT data corresponding to the modified MDT configuration can be obtained by using the modified MDT configuration.

For better understanding and implementation of the foregoing solutions in embodiments of this application, specific descriptions are provided below by using corresponding application scenarios as examples.

The following uses an example in which the core network device is specifically an AMF and the access network device is specifically a gNB for description. The gNB uses the MDT data in a plurality of manners. The following uses an example in which the gNB obtains the MDT data for AI model training and inference. The foregoing scenario is merely an implementation, and is not used as a limitation to embodiments of this application.

### Embodiment 1

The AMF sends an MDT data permission configuration message to the gNB. The gNB obtains MDT data based on an MDT data permission. The gNB uses the obtained MDT data for AI model input and inference. A manner in which the gNB obtains the MDT data may be that the gNB directly obtains the MDT data from a UE. If the gNB cannot obtain the MDT data from the UE, the gNB may obtain the MDT data from the AMF or a TCE.

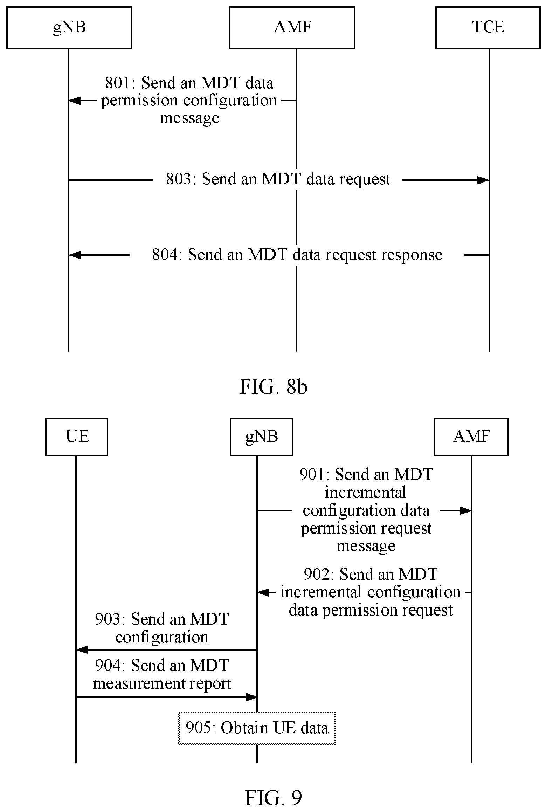

Based on the embodiments shown in FIG. 3 to FIG. 5 and with reference to an application scenario, the solutions provided in this application are described. FIG. 8a and FIG. 8b are diagrams of another embodiment of a data processing method according to an embodiment of this application. The following procedures are included.

Step 801: The AMF sends an MDT data permission configuration message to the gNB.

The AMF sends the MDT data permission configuration message to the gNB, so that the gNB obtains an MDT data permission allocated by the AMF.

MDT may be classified into signaling-based MDT and management-based MDT based on a case in which objects that collect the MDT data are different. For descriptions of the signaling-based MDT and the management-based MDT, refer to the foregoing related content.

Because there is a large amount of content of the MDT data, the AMF may not authorize all MDT data. In embodiments of this application, there are two authorization cases. One is that the AMF uniformly configures the MDT data permission for all MDT data of different UEs, and the other is that the AMF separately configures MDT data permissions for different MDT data of different UEs.

In a possible implementation, the AMF uniformly configures the permission for all the MDT data of the different UEs. In this case, the MDT data permission configuration message does not indicate which part of MDT data in an MDT measurement report is authorized. The MDT data permission configuration message includes at least one of the following: an identifier of a UE that performs the MDT, a data permission of immediate MDT, and a data permission of non-immediate MDT.

For example, content included in the MDT data permission configuration message may be shown in the following Table 1:

| Information element (Information Element, IE)/Group name | Value | IE type and related value | Semantics descriptions |
|---|---|---|---|
| UEs MDT permission configuration | | | |
| >UE ID | Optional (O) | | |
| >MDT type for selection | Mandatory (M) | | Is used for selection of a type of MDT data, which may be immediate MDT, logged MDT, and the like. |
| >>Immediate MDT | | | |
| >>>Whether authorization is performed | M | BITSTRING (SIZE(1)) | A value "1" indicates that authorization is performed, and a value "0" indicates that "authorization is not performed". |
| >>>Data usage | O | BITSTRING (SIZE(1)) | Corresponds to usage of each measurement item. The value "1" indicates that "only this node is authorized for using data inside", and the value "0" indicates that "the data may also be transmitted to a neighboring cell for using". No configuration means "0" by default. |
| >>Logged MDT | | | |
| >>>Whether authorization is performed | M | BITSTRING (SIZE(1)) | A value "1" indicates that authorization is performed, and a value "0" indicates that "authorization is not performed". |
| >>>Data usage | O | BITSTRING (SIZE(1)) | Corresponds to usage of each measurement item. The value "1" indicates that "only this node is authorized for using data inside", and the value "0" indicates that "the data may also be transmitted to a neighboring cell for using". No configuration means "0" by default. |

In another possible implementation, the AMF separately configures permissions for different MDT data of different UEs. In this case, the MDT data permission configuration message may indicate a specific part of data in an MDT measurement report that is authorized. The MDT data permission configuration message may include at least one of the following: an identifier of a UE that performs the MDT, an immediate MDT measurement item and a corresponding MDT data permission, and a non-immediate MDT measurement item and a corresponding MDT data permission.

For example, content included in the MDT data permission configuration message may be shown in the following Table 2:

| Information element/Group name | Value | IE type and related value | Semantics descriptions |
|---|---|---|---|
| UEs MDT permission configuration | | | |
| >UE ID | | | |
| >MDT type for selection | M | | Is used for selection of a type of MDT data, which may be immediate MDT, logged MDT, and the like. |
| >>Immediate MDT | | | |
| >>>Whether authorization is performed | | BITSTRING (SIZE(10)) | Each bit in a bitmap represents an authorization status of an MDT measurement item. |
| | | | First bit=M1, |
| | | | second bit=M2, |
| | | | third bit=M3, |
| | | | fourth bit=M4, |
| | | | fifth bit=M5, |
| | | | sixth bit=M6, |
| | | | seventh bit=M7, |
| | | | eighth bit=M8, |
| | | | ninth bit=M9, and |
| | | | tenth bit=location information (location information). |
| | | | A value "1" indicates that authorization is performed, and a value "0" indicates that "authorization is not performed". |
| >>>Data usage | O | BITSTRING (SIZE(10)) | Corresponds to usage of each measurement item. The value "1" indicates that "only this node is authorized for using data inside", and the value "0" indicates that "the data may also be transmitted to a neighboring cell for using". No configuration means "0" by default. |
| >>Logged MDT | | | |
| >>>Whether authorization is performed | | BITSTRING (SIZE(6)) | Each bit in a bitmap represents an authorization status of an MDT measurement item. |
| | | | First bit=location information (locationInfo), |
| | | | second bit=serving cell identity (servCellIdentity), |
| | | | third bit=serving cell measurement result (measResultServingCell), |
| | | | fourth bit=neighboring cell measurement result (measResultNeighCells), |
| | | | fifth bit=indicating that any cell selection state (anyCellSelectionDetected) is detected, and |
| | | | sixth bit=indicating that a measurement log is suspended due to detection of an intra-device coexistence problem (inDeviceCoexDetected). |
| | | | A value "1" indicates that authorization is performed, and a value "0" indicates that "authorization is not performed". |
| >>>Data usage | | BITSTRING (SIZE(6)) | Corresponds to usage of each measurement item. The value "1" indicates that "this node uses data inside", and the value "0" indicates that "the data is to be transmitted to a neighboring cell for using". |

Step 802: The gNB obtains the MDT data from the UE.

As shown in FIG. 8a, when a UE in a connected state performs the immediate MDT, the UE may send MDT data of the immediate MDT to the gNB for a plurality of times. When the UE in the non-connected state performs non-immediate MDT, the UE buffers the MDT data. Then, when initiating an RRC connection to the gNB, the UE indicates that the MDT data of the non-immediate MDT is currently recorded, and then the gNB may request the UE, and the UE reports the MDT data of the non-immediate MDT to the gNB.

Step 803: The gNB sends an MDT data request to the AMF or the TCE.

As shown in FIG. 8b, the gNB may request the MDT data from the AMF or the TCE. A difference between FIG. 8a and FIG. 8b lies in that the MDT data is obtained in different manners.

For example, when the gNB releases the MDT data or switching occurs when the UE in the non-connected state resumes an RRC connected state, the gNB does not have the MDT data locally. In this case, the gNB may request corresponding MDT data from the AMF based on the MDT data permission that are delivered by the AMF and a data requirement of an AI model. The MDT data request indicates usage information of the MDT, the identifier of the UE that performs the MDT, and a corresponding MDT data type.

Step 804: The AMF or the TCE sends an MDT data request response to the gNB.

According to Embodiment 1, the AMF delivers the MDT data permission to the gNB, so that the gNB can legally obtain the MDT data, and extract continuous UE data from the MDT data as input data and inference data of the AI model, to improve inference or training precision of the AI model deployed on the gNB.

### Embodiment 2

Based on the embodiments shown in FIG. 6 and FIG. 7, with reference to an application scenario, the solutions provided in this application are described. If the MDT data obtained by the gNB is insufficient to support a requirement of the AI model, the gNB may send an MDT incremental configuration data permission request to the AMF. The AMF returns a modified MDT data configuration and a data permission request response. Then, the gNB delivers a new MDT configuration to the UE, to obtain a new MDT measurement report and extract continuous UE data from the new MDT measurement report.

FIG. 9 is a diagram of another embodiment of a data processing method according to an embodiment of this application. The following steps are included.

Step 901: A gNB sends an MDT incremental configuration data permission request message to an AMF.

The MDT incremental configuration data permission request message may include: a trigger condition that the gNB requests to modify, and a configuration parameter of an MDT measurement item that the gNB requests to modify.

For descriptions about the trigger condition and the configuration parameter of the MDT measurement item, refer to the foregoing content.

The MDT incremental configuration data permission request message may include: an MDT data permission that the gNB requests to modify, or an MDT configuration that the gNB requests to modify.

For signaling-based MDT, the MDT incremental configuration data permission request message may include at least one of the following: an identifier of a UE that performs MDT, an original MDT configuration, a modified trigger condition for performing the MDT by the UE, a data permission of immediate MDT, and a data permission of non-immediate MDT.

The original MDT configuration includes: a trigger condition for performing the MDT, a measurement period and a reporting count of the immediate MDT, and a measurement interval and measurement duration of the non-immediate MDT. The modified trigger condition for performing the MDT by the UE includes an identifier of AI model training or inference.

The MDT incremental configuration data permission request message may be defined as shown in the following Table 3:

| Information element/Group name | Value | IE type and related value | Semantics descriptions |
|---|---|---|---|
| UE ID | O | STRING (SIZE (8)) | |
| MDT type for selection | M | | Is used for selection of a type of MDT data, which may be immediate MDT, logged MDT, and the like. |
| >Immediate MDT | | | |
| >>M1 configuration update | C-ifM1 | | A configuration parameter can be modified. For details, refer to the following descriptions. |
| >>M4 configuration update | C-ifM4 | | A configuration parameter can be modified. For details, refer to the following descriptions. |
| >>M5 configuration update | C-ifM5 | | A configuration parameter can be modified. For details, refer to the following descriptions. |
| >>M6 configuration update | C-ifM6 | | A configuration parameter can be modified. For details, refer to the following descriptions. |
| >>M7 configuration update | C-ifM7 | | A configuration parameter can be modified. For details, refer to the following descriptions. |
| >>Measurement item | | BITSTRING (SIZE(10)) | Each bit in a bitmap represents an authorization status of an MDT measurement item. |
| | | | First bit=M1, |
| | | | second bit=M2, |
| | | | third bit=M3, |
| | | | fourth bit=M4, |
| | | | fifth bit=M5, |
| | | | sixth bit=M6, |
| | | | seventh bit=M7, |
| | | | eighth bit=M8, |
| | | | ninth bit=M9, and |
| | | | tenth bit=location information (location information). |
| | | | A value "1" indicates that "authorization is requested", and a value "0" indicates that "authorization is not performed". |
| >>Data usage | | BITSTRING (SIZE(10)) | Corresponds to usage of each measurement item. The value "1" indicates that "this node uses data inside", and the value "0" indicates that "the data is to be transmitted to a neighboring cell for using". No configuration means "0" by default. |
| >Logged MDT | O | | Optionally, if no transmission is performed, no configuration is requested by default. |
| >>Logging interval | O | ENUMERATED (320 ms, 640 ms, 1280 ms, 2560 ms, 5120 ms, 10240 ms, 20480 ms, 30720 ms, 40960 ms, 61440 ms, infinity, and the like) | Can be assigned to request a configuration. |
| >>Logging period | O | ENUMERATED (10, 20, 40, 60, 90, 120, and the like) | Unit: [minute]. |
| | | | Can be assigned to request a configuration. |
| >>Logged MDT triggering event configuration update | O | BITSTRING (SIZE(6)) | A configuration parameter can be modified. For details, refer to the following descriptions. |
| >>Measurement item | | | Each bit in a bitmap represents an authorization status of an MDT measurement item. |
| | | | First bit=location information (locationInfo), |
| | | | second bit=serving cell identity (servCellIdentity), |
| | | | third bit=serving cell measurement result (measResultServingCell), |
| | | | fourth bit=neighboring cell measurement result (measResultNeighCells), |
| | | | fifth bit=indicating that any cell selection state (anyCellSelectionDetected) is detected, and |
| | | | sixth bit=indicating that a measurement log is suspended due to detection of an intra-device coexistence problem (inDeviceCoexDetected). |
| | | | A value "1" indicates that "authorization is requested", and a value "0" indicates that "authorization is not performed". |
| >>Data usage | | BITSTRING (SIZE(6)) | Corresponds to usage of each measurement item. The value "1" indicates that "this node uses data inside", and the value "0" indicates that "the data is to be transmitted to a neighboring cell for using". No configuration means "0" by default. |

For modification of an immediate MDT configuration parameter, M1 configuration update is used as an example, as shown in the following Table 4:

| Information element/Group name | Value | IE type and related value | Semantics descriptions |
|---|---|---|---|
| Adding of M1 reporting trigger | O | ENUMERATED (AI 1 event-triggered, and the like) | Triggering event that can be added |
| M1 event AI 1 | C-ifM1AI1trigger | | Is an added triggering event, and an AI 1 triggering event is used as an example. |
| >AI 1 identifier 1 | | BITSTRING (SIZE(1)) | When an AI 1 model is started, an M1 measurement configuration is triggered. 0 indicates no trigger, and 1 indicates trigger. |
| M1 threshold event A2 | O | | Optionally, if no transmission is performed, no configuration is requested by default. |
| >Threshold type for selection | O | | |
| >>RSRP | | | |
| >>>RSRP threshold | O | INTEGER (0...127) | Can be assigned to request a configuration. |
| >>RSRQ | | | |
| >>>RSRQ threshold | O | INTEGER (0...127) | Can be assigned to request a configuration. |
| >>SINR | | | |
| >>>SINR threshold | O | INTEGER (0...127) | Can be assigned to request a configuration. |
| M1 reporting period | O | | Optionally, if no transmission is performed, no configuration is requested by default. |
| >Reporting interval | O | ENUMERATED (ms 120, ms 240, ms 480, ms 640, ms 1024, ms 2048, ms 5120, ms 10240, min 1, min 6, min 12, min 30, and min 60) | Can be assigned to request a configuration. |
| >Reporting value | O | ENUMERATED (1, 2, 4, 8, 16, 32, 64, and infinity) | Number of reports. |
| | | | Can be assigned to request a configuration. |
| Beam measurement reporting condition | O | | Optionally, if no transmission is performed, no configuration is requested by default. |

An example of an M1 configuration condition is shown in the following Table 5:

| Condition | Explanation |
|---|---|
| C-ifM1AI1trigger | If an IE is an "M1 reporting trigger" IE and the IE is set to be "AI 1 event-triggered" or "AI 1 event-triggered periodic", the IE shall be present. |
| C-ifM1A2trigger | If an IE is an "M1 reporting trigger" IE and the IE is set to be "A2 event-triggered" or "A2 event-triggered periodic", the IE shall be present. |
| C-ifperiodicMDT | If an IE is an "M1 reporting trigger" IE and the IE is set to be "periodic" or "A2 event-triggered periodic", the IE shall be present. |
| C-ifM1BeamMeasInd | If an IE is set to a "beam measurement indication" and the IE is set to be "true", the IE should exist. |

For modification of a non-immediate MDT configuration parameter, configuration update based on the non-immediate MDT triggering event shown in Table 3 may be defined, as shown in the following Table 6:

| | | | |
|---|---|---|---|
| Information element/Group name | Value | IE type and related value | Semantics descriptions |
| Event triggering type for selection | O | | Optionally, if no transmission is performed, no configuration is requested by default. |
| >Out-of-coverage | | | |
| >>Out-of-coverage configuration | O | ENUMERATED (true, and the like) | Can be assigned to request a configuration. |
| >L1 event | | | |
| >>L1 event threshold for selection | O | | |
| >>>RSRP | | | |
| >>>>RSRP threshold | O | INTEGER (0...127) | Can be assigned to request a configuration. |
| >>>RSRQ | | | |
| >>>>RSRQ threshold | O | INTEGER (0...127) | Can be assigned to request a configuration. |
| >>Hysteresis (Hysteresis) | O | INTEGER (0...30) | Indicates whether this parameter can be used in an MDT event triggering reporting condition. |
| | | | Can be assigned to request a configuration. |
| >>Trigger time point | O | ENUMERATED (ms 0, ms 40, ms 64, ms 80, ms 100, ms 128, ms 160, ms 256, ms 320, ms 480, ms 512, ms 640, ms 1024, ms 1280, ms 2560, and ms 5120) | Is a time point at which a measurement report can be triggered when a specific criterion of an event is met. |
| | | | Can be assigned to request a configuration. |
| >AI 1 event | O | | Is an added triggering event, and an AI 1 triggering event is used as an example. |
| >>AI 1 identifier 1 | | BITSTRING (SIZE(1)) | When an AI 1 model is started, an M1 measurement configuration is triggered. 0 indicates no trigger, and 1 indicates trigger. |

For management-based MDT, the MDT incremental configuration data permission request message may include at least one of the following: a filtering condition of UEs that perform MDT, an original MDT configuration, a modified trigger condition for performing the MDT by the UE, a data permission of the immediate MDT, and a data permission of the non-immediate MDT. The original MDT configuration, the modified trigger condition for performing the MDT by the UE, the data permission of the immediate MDT, and the data permission of the non-immediate MDT are the same as the foregoing signaling-based MDT, as shown in Table 3.

The modified trigger condition for performing the MDT by the UE may be defined as shown in the following Table 7:

| Information element/Group name | Value | IE type and related value |
|---|---|---|
| UE ID list | O | STRING (SIZE (8)) |
| UE percentage | O | ENUMERATED (0, 10, 20, 30, 40, 50, 60, 70, 80, 90, and 100) |
| UE filtering condition | O | |
| >>Cell ID list | | |
| >>PLNM list | | |

Step 902: The AMF sends an MDT incremental configuration data permission request response to the gNB.

The AMF sends the MDT incremental configuration data permission request response to the gNB based on an MDT incremental configuration data permission request sent by the gNB. The MDT incremental configuration data permission request response sent to the gNB includes the modified MDT data permission and the modified MDT configuration. For descriptions of the modified MDT data permission and the modified MDT configuration, refer to the foregoing content.

Step 903: The gNB delivers the MDT configuration to the UE.

After receiving the new MDT configuration in step 902, the gNB delivers the MDT configuration to the UE.

Step 904: The UE sends an MDT measurement report to the gNB.

After the UE receives the MDT configuration based on step 903, the UE performs the MDT, generates the MDT measurement report, and sends the MDT measurement report to the gNB.

Step 905: The gNB obtains UE data.

The gNB obtains the continuous UE data from the MDT data. The continuous UE data includes non-immediate MDT data of a UE in a non-connected state and immediate MDT data reported by a UE in a connected state for a plurality of times.

According to Embodiment 2, the gNB may request an MDT incremental configuration data permission from the AMF based on a requirement of the AI model, so that the gNB can legally obtain the MDT data, and extract the continuous UE data from the MDT data as input data and inference data of the AI model, to improve inference or training precision of the AI model deployed on the gNB.

It may be understood that, for brief description, the foregoing method embodiments are represented as a series of actions. However, a person skilled in the art should appreciate that this application is not limited to the described order of the actions, because according to this application, some steps may be performed in other orders or simultaneously. Moreover, it should be further appreciated by a person skilled in the art that actions and modules in the embodiments described in this specification are not necessarily required by this application.

To better implement the solutions of embodiments of this application, a related apparatus for implementing the solutions is further provided below.

The foregoing method embodiments may be implemented separately or together. For terms and related technologies in embodiments, refer to each other. In other words, technical solutions that do not conflict with each other or that do not logically conflict with each other in different embodiments may be combined with each other. This is not specifically limited in this application.

The following describes a communication apparatus provided in embodiments of this application.

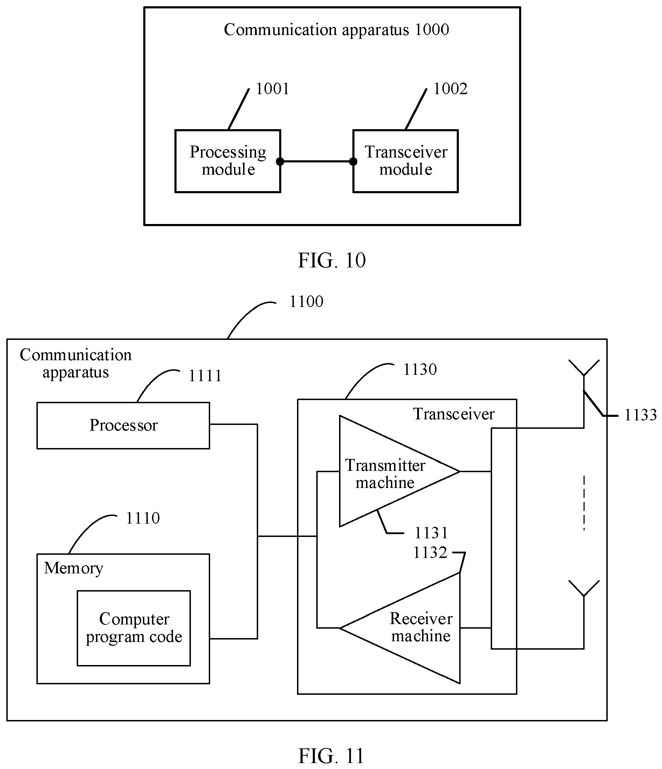

FIG. 10 is a diagram of a structure of a communication apparatus according to an embodiment of this application. Refer to FIG. 10. The communication apparatus may be configured to perform processes performed by the core network device in the embodiments shown in FIG. 3 to FIG. 7, or the communication apparatus may be configured to perform processes performed by the access network device in the embodiments shown in FIG. 3 to FIG. 7. For details, refer to related descriptions in the foregoing method embodiments.

The communication apparatus 1000 includes a processing module 1001 and a transceiver module 1002. The transceiver module 1002 may implement a corresponding communication function, and the processing module 1001 is configured to perform data processing. The transceiver module 1002 may also be referred to as a communication interface or a communication module.

Optionally, the communication apparatus 1000 may further include a storage module. The storage module may be configured to store instructions and/or data. The processing module 1001 may read the instructions and/or the data in the storage module, to enable the communication apparatus to implement the foregoing method embodiments.

The communication apparatus 1000 may be configured to perform an action performed by the communication apparatus in the foregoing method embodiments. The communication apparatus 1000 may be a communication apparatus or a component that can be configured in the communication apparatus. The processing module 1001 is configured to perform a processing-related operation on a communication apparatus side in the foregoing method embodiments. Optionally, the transceiver module 1002 is configured to perform a receiving-related operation on a communication apparatus side in the foregoing method embodiments.

Optionally, the transceiver module 1002 may include a sending module and a receiving module. The sending module is configured to perform a sending operation in the foregoing method embodiments. The receiving module is configured to perform a receiving operation in the foregoing method embodiments.

It may be understood that, the communication apparatus 1000 may include the sending module but not include the receiving module. Alternatively, the communication apparatus 1000 may include the receiving module but not include the sending module. This may be specifically determined depending on whether the foregoing solutions performed by the communication apparatus 1000 include a sending action and a receiving action.

It should be understood that, a specific process in which the modules perform the foregoing corresponding processes has been described in detail in the foregoing method embodiments. For brevity, details are not described herein again.

The processing module 1001 in the foregoing embodiments may be implemented by at least one processor or processor-related circuit. The transceiver module 1001 may be implemented by a transceiver or a transceiver-related circuit. The transceiver module 1002 may also be referred to as the communication module or the communication interface. The storage module may be implemented through at least one memory.

In an implementation, the communication apparatus is configured to perform step 301 and step 302, step 402 and step 403, step 502, step 602 to step 604, as well as step 702 and step 703 that are performed by the core network device in the foregoing method embodiments.

In an implementation, the communication apparatus is configured to perform step 303 and step 304, step 401 and step 404, step 501, step 601, step 605, step 606, step 701, as well as step 704 and step 705 that are performed by the access network device in the foregoing method embodiments.

FIG. 11 is a simplified diagram of a structure of a communication apparatus. As shown in FIG. 11, the communication apparatus includes a processor, a memory, and a transceiver. The memory may store computer program code, and the transceiver includes a transmitter machine 1131, a receiver machine 1132, an antenna 1133, and an input/output apparatus (not shown in the figure).

The processor is mainly configured to process a communication protocol and communication data, and control the communication apparatus to execute a software program, process data of the software program, and the like. The memory is mainly configured to store the software program and data.

When sending data, after performing baseband processing on to-be-sent data, the processor outputs a baseband signal to a radio frequency circuit. The radio frequency circuit sends a radio frequency signal to the outside in a form of an electromagnetic wave through the antenna after performing radio frequency processing on the baseband signal. When the data is sent to the communication apparatus, the radio frequency circuit receives the radio frequency signal through the antenna, converts the radio frequency signal into the baseband signal, and outputs the baseband signal to the processor. The processor converts the baseband signal into data, and processes the data. For ease of description, FIG. 11 shows only one memory, one processor, and one transceiver. In an actual communication apparatus product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna having sending and receiving functions and the radio frequency circuit may be considered as a transceiver module of the communication apparatus, and the processor having a processing function may be considered as a processing module of the communication apparatus.

As shown in FIG. 11, the communication apparatus includes a processor 1110, a memory 1120, and a transceiver 1130. The processor 1110 may also be referred to as a processing unit, a processing board, a processing module, a processing apparatus, or the like. The transceiver 1130 may also be referred to as a transceiver unit, a transceiver machine, a transceiver apparatus, or the like.

Optionally, a component configured to implement a receiving function in the transceiver 1130 is considered as a receiving module, and a component configured to implement a sending function in the transceiver 1130 is considered as a sending module. That is, the transceiver 1130 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitting circuit, or the like.

It should be understood that, FIG. 11 is merely an example rather than a limitation, and the communication apparatus including the transceiver module and the processing module may not depend on the structure shown in FIG. 11.

When the communication apparatus 1100 is a chip, the chip includes a processor, a memory, and a transceiver. The transceiver may be an input/output circuit or a communication interface. The processor may be a processing module, a microprocessor, or an integrated circuit integrated on the chip. A sending operation performed by the communication apparatus in the foregoing method embodiments may be understood as an output of the chip, and a receiving operation performed by the communication apparatus in the foregoing method embodiments may be understood as an input of the chip.

In an implementation, the communication apparatus is configured to perform step 301 and step 302, step 402 and step 403, step 502, step 602 to step 604, as well as step 702 and step 703 that are performed by the core network device in the foregoing method embodiments.

In an implementation, the communication apparatus is configured to perform step 303 and step 304, step 401 and step 404, step 501, step 601, step 605, step 606, step 701, as well as step 704 and step 705 that are performed by the access network device in the foregoing method embodiments.

An embodiment of this application further provides a computer-readable storage medium. The computer-readable storage medium stores computer instructions used to implement the method performed by the terminal device or the network device in the foregoing method embodiments.

For example, when a computer program is executed by a computer, the computer is enabled to implement the method performed by the terminal device or the network device in the foregoing method embodiments.

An embodiment of this application further provides a computer program product including instructions. When the instructions are executed by a computer, the computer is enabled to implement the method performed by the terminal device or the network device in the foregoing method embodiments.

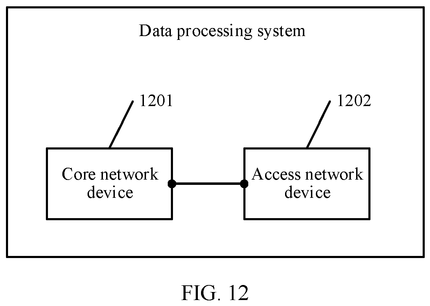

As shown in FIG. 12, an embodiment of this application further provides a data processing system. The communication system includes the core network device and the access network device in the foregoing embodiments.

An embodiment of this application further provides a chip apparatus including a processor, configured to invoke a computer program or computer instructions stored in a memory, to enable the processor to perform the methods in the embodiments shown in FIG. 3 to FIG. 7.

In a possible implementation, an input of the chip apparatus corresponds to the receiving operation in the embodiments shown in FIG. 3 to FIG. 7, and an output of the chip apparatus corresponds to the sending operation in the embodiments shown in FIG. 3 to FIG. 7.

Optionally, the processor is coupled to the memory through an interface.

Optionally, the chip apparatus further includes the memory, and the memory stores the computer program or the computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control program execution of the methods in the embodiments shown in FIG. 3 to FIG. 7. The memory mentioned in any one of the foregoing descriptions may be a read-only memory (read-only memory, ROM), another type of static storage device that can store static information and instructions, a random access memory (random access memory, RAM), or the like.

It can be clearly understood by a person skilled in the art that, for convenient and brief description, for explanations and beneficial effects of related content in any one of the communication apparatuses provided above, refer to the corresponding method embodiments provided above. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual application scenarios to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the related art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the network device and/or the terminal device may perform some or all of the steps in embodiments of this application, and these steps or operations are merely examples. In embodiments of this application, another operation or various operation variations may be further performed. In addition, the steps may be performed in different sequences presented in embodiments of this application, and not all the operations in embodiments of this application may need to be performed.

## Claims

1. A data processing method, wherein the method is applied to a core network device, and the method comprises:
determining a minimization of drive test MDT data permission allocated to an access network device; and
sending first information to the access network device, wherein the first information indicates the MDT data permission.

2. The method according to claim 1, wherein the first information comprises indication information of a terminal device that performs MDT.

3. The method according to claim 1 or 2, wherein the first information comprises indication information of an MDT type; and the MDT type comprises at least one of the following: immediate MDT and non-immediate MDT.

4. The method according to any one of claims 1 to 3, wherein the first information comprises usage information of the MDT; and
the usage information of the MDT indicates that MDT data is used inside the access network device, or indicates that MDT data is used inside the access network device and indicates the access network device to transmit the MDT data to another access network device.

5. The method according to any one of claims 1 to 4, wherein the first information comprises: an identifier of the terminal device that performs the MDT, an MDT measurement item, and an MDT data permission corresponding to the MDT measurement item.

6. The method according to any one of claims 1 to 5, wherein the method further comprises:
receiving an MDT data request sent by the access network device based on the MDT data permission; and
sending a response corresponding to the MDT data request to the access network device, wherein the response comprises the MDT data.

7. The method according to claim 6, wherein the MDT data comprises: non-immediate MDT data that is of a terminal device in a non-connected state and that is buffered in the core network device, and/or immediate MDT data that is sent by a terminal device in a connected state to the core network device for a plurality of times.

8. The method according to any one of claims 1 to 7, wherein the method further comprises:
receiving a first request from the access network device, wherein the first request is used to request the MDT data permission from the core network device.

9. The method according to any one of claims 1 to 8, wherein the method further comprises:
receiving a second request from the access network device, wherein the second request is used to request the core network device to modify the MDT data permission;
modifying, based on the second request, the MDT data permission allocated to the access network device; and
sending second information to the access network device, wherein the second information indicates the modified MDT data permission.

10. The method according to claim 9, wherein the second information comprises the indication information of the terminal device that performs the MDT.

11. The method according to claim 2 or 10, wherein when the MDT is management-based MDT, the indication information of the terminal device comprises at least one of the following: a terminal device selection proportion, a terminal device identifier list, and a terminal device filtering condition; or
when the MDT is signaling-based MDT, the indication information of the terminal device comprises an identifier of the terminal device.

12. The method according to any one of claims 1 to 11, wherein the method further comprises:
receiving a third request from the access network device, wherein the third request is used to request the core network device to modify an MDT configuration; and
sending third information to the access network device, wherein the third information comprises the modified MDT configuration.

13. The method according to claim 12, wherein the modified MDT configuration comprises: a modified trigger condition corresponding to the MDT measurement item, and/or a modified configuration parameter corresponding to the MDT measurement item.

14. The method according to claim 13, wherein when the MDT is the immediate MDT, the configuration parameter comprises: a measurement period of the MDT measurement item, and/or an MDT event triggering configuration parameter of the MDT measurement item; or
when the MDT is the non-immediate MDT, the configuration parameter comprises at least one of the following: a measurement interval of the MDT measurement item, measurement duration of the MDT measurement item, or an MDT event triggering configuration parameter of the MDT measurement item.

15. The method according to claim 13 or 14, wherein the modified trigger condition comprises an added or deleted trigger condition.

16. A data processing method, wherein the method is applied to an access network device, and the method comprises:
receiving first information from a core network device; and
obtaining, based on the first information, a minimization of drive test MDT data permission allocated to the access network device.

17. The method according to claim 16, wherein the method further comprises:
obtaining MDT data based on the MDT data permission.

18. The method according to claim 17, wherein the obtaining the MDT data based on the MDT data permission comprises:
sending an MDT data request to the core network device based on the MDT data permission; and
receiving, from the core network device, a response corresponding to the MDT data request, wherein the response comprises the MDT data.

19. The method according to claim 18, wherein the MDT data comprises: non-immediate MDT data that is of a terminal device in a non-connected state and that is buffered in the core network device, and/or immediate MDT data that is sent by a terminal device in a connected state to the core network device for a plurality of times.

20. The method according to claim 17, wherein the obtaining the MDT data based on the MDT data permission comprises:
receiving, based on the MDT data permission, an MDT measurement report sent by a terminal device, wherein the MDT measurement report comprises the MDT data.

21. The method according to any one of claims 16 to 20, wherein the MDT data permission comprises: usage information of MDT, wherein the usage information of the MDT indicates the access network device to transmit the MDT data to another access network device, and the method further comprises:
transmitting the MDT data to the another access network device.

22. The method according to any one of claims 16 to 21, wherein the first information comprises indication information of an MDT type; and the MDT type comprises at least one of the following: immediate MDT and non-immediate MDT.

23. The method according to any one of claims 16 to 22, wherein the first information comprises: an identifier of the terminal device that performs the MDT, an MDT measurement item, and an MDT data permission corresponding to the MDT measurement item.

24. The method according to any one of claims 16 to 23, wherein the method further comprises:
sending a first request to the core network device, wherein the first request is used to request the MDT data permission from the core network device.

25. The method according to any one of claims 16 to 24, wherein the method further comprises:
sending a second request to the core network device, wherein the second request is used to request the core network device to modify the MDT data permission;
receiving second information from the core network device; and
obtaining, based on the second information, the modified MDT data permission allocated to the access network device.

26. The method according to any one of claims 16 to 25, wherein the method further comprises:
sending a third request to the core network device, wherein the third request is used to request the core network device to modify an MDT configuration;
receiving third information from the core network device; and
obtaining the modified MDT configuration based on the third information.

27. The method according to claim 26, wherein the modified MDT configuration comprises: a modified trigger condition corresponding to the MDT measurement item, and/or a modified configuration parameter corresponding to the MDT measurement item.

28. The method according to claim 27, wherein when the MDT is the immediate MDT, the configuration parameter comprises: a measurement period of the MDT measurement item, and/or an MDT event triggering configuration parameter of the MDT measurement item; or
when the MDT is the non-immediate MDT, the configuration parameter comprises at least one of the following: a measurement interval of the MDT measurement item, measurement duration of the MDT measurement item, or an MDT event triggering configuration parameter of the MDT measurement item.

29. A communication apparatus, comprising a processor and a memory, wherein the processor and the memory communicate with each other;
the memory is configured to store instructions; and
the processor is configured to execute the instructions in the memory, to perform the method according to any one of claims 1 to 15.

30. A communication apparatus, comprising a processor and a memory, wherein the processor and the memory communicate with each other;
the memory is configured to store instructions; and
the processor is configured to execute the instructions in the memory, to perform the method according to any one of claims 16 to 28.

31. A data processing system, wherein the system comprises a core network device and an access network device, wherein
the core network device is configured to perform the method according to any one of claims 1 to 15; and
the access network device is configured to perform the method according to any one of claims 16 to 28.

32. A computer-readable storage medium, comprising instructions, wherein when the instructions are run on a computer, the computer is enabled to perform the method according to any one of claims 1 to 15 or 16 to 28.

33. A computer program product comprising instructions, wherein when the computer program product is run on a computer, the computer is enabled to perform the method according to any one of claims 1 to 15 or 16 to 28.
